# EUROPÄISCHE PATENTSCHRIFT

(11) **EP 1 567 376 B1**
(45) Veröffentlichungstag und Bekanntmachung des Hinweises auf die Patenterteilung: **29.03.2006**
(21) Anmeldenummer: 03812144.8
(22) Anmeldetag: 05.11.2003
(51) Int. Cl.: B60H 1/22

(54) **VERFAHREN ZUR REGELUNG DES BETRIEBS EINER FAHRZEUG-STANDHEIZUNG/STANDLÜFTUNG**
METHOD FOR REGULATION OF THE OPERATION OF A VEHICLE AUXILIARY HEATING/AUXILIARY VENTILATION
PROCEDE DE REGULATION DU FONCTIONNEMENT DU CHAUFFAGE AUXILIAIRE/DE LA VENTILATION AUXILIAIRE D'UN VEHICULE

(30) Priorität: 04.12.2002 DE 10256867
(43) Veröffentlichungstag der Anmeldung: 31.08.2005
(73) Patentinhaber: DaimlerChrysler AG, 70567 Stuttgart (DE)
(72) Erfinder: RÖHM, Rolf, 71131 Jettingen (DE); SEILER, Bernd, 70439 Stuttgart (DE)
(86) Internationale Anmeldenummer: PCT/EP2003/012303
(87) Internationale Veröffentlichungsnummer: WO 2004/050401

(56) Entgegenhaltungen:
- DE-A- 10 004 510
- DE-A- 10 050 513
- DE-A- 19 814 581

## Beschreibung

Die Erfindung betrifft ein Verfahren zur Regelung des Betriebs einer Fahrzeug-Standheizung/Standlüftung.

Aus der DE 197 28 724 A1 ist ein Wärmeflussverbund in Kraftfahrzeugen besteht aus einem zusammenhängenden Kühlmittelleitungssystem bekannt. Ein Steuergerät nimmt in Abhängigkeit von Ist-Wärmeflüssen und Soll-Wärmeflüssen eine Beeinflussung der Wärmeflüsse derart vor, dass die Summe aller von Funktionskomponenten abgehenden Wärmeflüsse in etwa gleich der Summe aller den Funktionskomponenten zugeführten Wärmeflüsse ist. Die Funktionskomponenten sind eine Heizungsanlage, eine Brennkraftmaschine, ein Kühler, ein Latentwärmespeicher und eine Standheizung.

Aus der DE 100 04 510 A1, das der nächsten Stand der Technik bildet, ist ein Verfahren zur Regelung des Betriebs einer Fahrzeugstandheizung bekannt.

Bei Personenkraftwagen in der Mittel-/Oberklasse wird entweder serienmäßig oder als Sonderausstattung die Standheizung angeboten, um den Komfort der Klimatisierung in der Übergangs- bzw. Winterzeit zu steigern. Bei Fahrzeugen mit Front-und Fondheizung wird aus Kostengründen nur eine Standheizung verwendet. Da die Standheizung nur eine Leistung von ca. 4,5 bis 7 KW hat, wurde bisher bei Aktivierung der Standheizung/Standlüftung nur die Frontanlage aktiviert, um den Innenraum zu klimatisieren, d.h. aufzuheizen, und die Frontscheibe zu enteisen. Die Fondanlage kann nur über eine REST-Funktion manuell aktiviert werden, wenn eine derartige REST-Funktion in einer Fondbedienung vorhanden ist. Wenn die Fondbedienung keine REST-Funktion aufweist, kann zur Zeit die Heizleistung der Fondanlage nicht genutzt werden. Wird die Fondanlage bei Standheizungsbetrieb nicht aktiviert, wird nur der Wasserkreislauf der Frontanlage erwärmt und der Wasserkreislauf der Fondanlage bleibt kalt.

Startet man bei dieser Bedingung den Motor, d.h. wenn das Wasser im Frontkreislauf warm ist und das Wasser im Fondkreislauf kalt ist, bricht durch das Mischen des warmen bzw. kalten Wassers die Einblastemperatur der Frontanlage zusammen. Dieses Abkühlen der Einblastemperatur ist für den Fahrer bzw. Beifahrer sehr unkomfortabel.

Daher ist es Aufgabe der vorliegenden Erfindung, ein Verfahren zur Regelung des Betriebs einer Fahrzeug-Standheizung/Standlüftung auszubilden, durch das das vorstehend beschriebene Problem vermieden werden kann.

Diese Aufgabe wird erfindungsgemäß durch ein Verfahren zur Regelung des Betriebs eines Fahrzeug-Standheizung/Standlüftung mit den Merkmalen von Anspruch 1 gelöst. In den Unteransprüchen sind vorteilhafte Weiterbildungen der Erfindung angegeben.

Durch das erfindungsgemäße Verfahren zur Regelung des Betriebs einer Fahrzeug-Standheizungs/Standlüftung wird die Heizenergie, die von der Standheizung zur Verfügung gestellt wird, optimal ausgenutzt. Dadurch, dass die Front- und Fondanlage zum Aufheizen bzw. Klimatisieren des Fahrzeuginnenraums aktiviert wird, kann der Innenraum schneller und gleichmäßiger erwärmt bzw. klimatisiert werden und der gesamte Wasserkreislauf wird erwärmt. Dadurch kann eine deutliche Komfortsteigerung erreicht werden.

Diese und weitere Aufgaben, Merkmale und Vorteile der vorliegenden Erfindung werden aus der nachfolgenden Beschreibung eines bevorzugten Ausführungsbeispiels der Erfindung in Verbindung mit der Zeichnung offensichtlich.

Dabei zeigen:

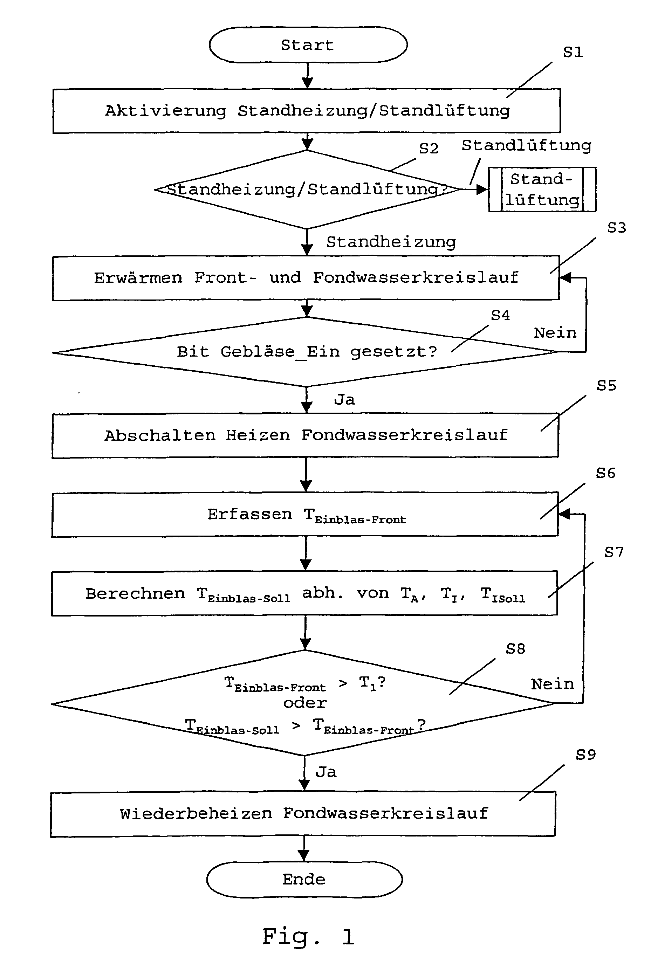

- Fig. 1: ein Ablaufdiagramm des erfindungsgemäßen Verfahrens zur Regelung des Betriebs eines Fahrzeug-Standheizung/Standlüftung.

Im Folgenden wird unter Bezugnahme auf Fig. 1 das erfindungsgemäße Verfahren zur Regelung des Betriebs einer Fahrzeug-Standheizung/Standlüftung genauer erläutert.

Beim erfindungsgemäßen Verfahren zur Regelung des Betriebs einer Fahrzeug-Standheizung/Standlüftung wird zunächst in Schritt S1 eine Standheizung/Standlüftung aktiviert. Die Aktivierung kann hierbei über einen Taster beispielsweise in einem vorderen Bedienfeld des Fahrzeugs, über eine Zeitvorwahleinrichtung, die beispielsweise im Kombiinstrument enthalten ist, über ein Funkfernbedienung oder über ein Mobiltelefon erfolgen. Ein Ausschaltsignal kann über den ebenfalls zum Einschalten verwendeten Taster, über die Funkfernbedienung, das Mobiltelefon, über das vordere Bedienfeld, über den Zeitablauf in einem Standheizungssteuergerät oder über eine Bordnetzspannung im Steuergerät erfolgen.

Darauffolgend wird in Schritt S2 abgefragt, ob ein Standheizungsbetrieb oder ein Standlüftungsbetrieb vorliegt. Dazu wird von einem Standheizungsteuergerät an die Klimasteuergeräte ein Bit "Standheizen/Standlüften" gesendet. Auf dieses Bit hin überprüft jedes Klimasteuergerät an Hand von eingestelltem Innenraumtemperatursollwert T_{ISoll}, dem Innenraumtemperatur-Istwert T_{I} sowie der Außentemperatur T_{A}, ob geheizt oder gelüftet werden muss. Wenn alle Klimasteuergeräte zum Ergebnis Lüften kommen, wird entschieden, dass der Standlüftungsbetrieb erforderlich ist. Wenn zumindest ein Klimasteuergerät entscheidet, dass ein Heizbetrieb erforderlich ist, wird entschieden, dass der Standheizungsbetrieb erforderlich ist. Im Fall, dass der Standlüftungsbetrieb vorliegt, wird in eine nicht näher beschriebenen Ablauf zur Standlüftung abgezweigt. Wenn hingegen der Standheizungsbetrieb vorliegt, erfolgt in Schritt S3 ein Erwärmen des Front- und der Fondwasserkreislaufs durch die Standheizung. In einem Schritt S4 wird anschließend überprüft, ob ein Bit Gebläse_Ein gesetzt ist. Dieses Bit wird durch ein Standheizungssteuergerät ausgegeben, wenn die Temperatur des Front- und des Fondwasserkreislaufs über einem vorbestimmten Schwellenwert, beispielsweise 40°C liegt. Solange das Bit nicht gesetzt ist, kehrt der Ablauf zu Schritt S3 zurück, damit der Front- und Fondwasserkreislauf weiter erwärmt wird.

Wenn jedoch das Bit in Schritt S4 als gesetzt erkannt wird, d.h. die Temperatur des Front- und Fondwasserkreislaufs über dem vorbestimmten Schwellenwert liegt, wird in Schritt S5 das Heizen des Fondwasserkreislaufs abgeschaltet und nur noch der Frontwasserkreislauf weiter erwärmt. Das erwärmte Wasser bleibt dann im Fondwasserkreislauf stehen. Die gesamte Heizenergie wird dann durch die ausschließliche Beheizung des Frontwasserkreislaufs zur Enteisung der Frontscheibe verwendet. Nachfolgend wird in Schritt S6 die Front-Einblastemperatur T_{Einblas-Front} erfasst sowie in Schritt die Soll-Einblastemperatur T_{Einblas-Soll} abhängig von der Außentemperatur T_{A}, der Ist-Innenraumtemperatur T_{I} sowie der Soll-Innenraumtemperatur T_{ISoll} berechnet.

In Schritt S8 erfolgt eine Auswertung dieser erfassten Front-Einblastemperatur T_{Einblas-Front} und der berechneten Temperatur T_{Einblas-Soll}, indem für die Front-Einblastemperatur T_{Einblas-Front} ein Vergleich mit einem Schwellenwert T₁, beispielsweise 54°C, durchgeführt wird bzw. für die Soll-Einblastemperatur T_{Einblas-Soll} ein Vergleich mit der erfassten Front-Einblastemperatur T_{Einblas-Front} erfolgt, d.h. es wird verglichen, ob eine innere Reglerabweichung (rechts und links) muss kleiner als -10K ist. Der Schwellenwert T₁ ist hierbei beispielsweise ein Maximalwert für die Einblastemperatur. Die Abweichung zwischen der tatsächlichen Einblastemperatur T_{Einblas-Front} und der Soll-Einblastemperatur T_{Einblas-Soll} entsteht bei sehr niedrigen Außentemperaturen immer, da die berechnete Soll-Einblastemperatur T_{Einblas-Soll} in derartigen Fällen nicht erzielt werden kann. Wenn die Front-Einblastemperatur T_{Einblas- Front} über dem vorbestimmten Schwellenwert T1 liegt oder die Soll-Einblastemperatur T_{Einblas-Soll} über der erfassten EinblasTemperatur T_{Einblas} liegt, erfolgt in Schritt S9 ein Wiederbeheizen des Fondwasserkreislaufs zur Klimatisierung des Innenraums. Ansonsten kehrt der Ablauf zu Schritt S6 zurück.

Für die erfindungsgemäße Regelung ist zu beachten, dass im Winter für eine Begrenzung der Soll-Einblastemperatur T_{Einblas-Soll} nicht die Kühlwassertemperatur verwendet werden darf. In diesem Fall könnte nämlich die Regelung trotz warmen Heizwasserkreislaufs (Einblastemperaturen) eine niedere Einblastemperatur vorgeben. Daher werden bei Einblastemperaturen der Frontklimaanlage unter 40°C die Soll-Einblastemperaturen der Fondklimaanlage auf 60°C begrenzt. Es werden solange Soll-Einblastemperaturen von 60°C vorgegeben, bis die Einblasbedingungen (Soll-Einblasbegrenzung der Fondklimaanlage) der Frontklimaanläge aktiv sind.

Es wird sichergestellt, dass die Standheizungs/Standlüftungs-Entscheidung erst getroffen wird, wenn alle dazu notwendigen Fühlerwerte richtig initialisiert sind. Dabei liegt eine Einschalthysteresekurve vor.

Wenn die Standlüftung/Standheizung während aktivem REST-Betrieb, d.h. einer Restwärmenutzung eingeschaltet wird, wird die aktivierte Einstellung REST deaktiviert. Die REST-Funktion bleibt während aktiver Standlüftung/Standheizung gesperrt.

Zusammenfassend offenbart die vorliegende Erfindung ein Verfahren zur Regelung des Betriebs einer Fahrzeug-Standheizung/Standlüftung. Durch das erfindungsgemäße Verfahren wird die Heizenergie, die von der Standheizung zur Verfügung gestellt wird, optimal ausgenutzt. Dazu werden die Front- und die Fondanlage bis zu einer bestimmten Grenztemperatur des Front- und Fondwasserkreislaufs zum Aufheizen bzw. Klimatisieren des Fahrzeuginnenraums verwendet, so dass der Innenraum schneller und gleichmäßiger erwärmt werden kann, da der gesamte Wasserkreislauf erwärmt wird. Nach Erreichen der Grenztemperatur des Front- und Fondwasserkreislaufs wird nur noch der Frontwasserkreislauf weiter erwärmt, z.B. um die Frontscheibe aufzutauen und den vorderen Innenraum zu erwärmen. Wenn die Einblastemperatur im vorderen Innenraum einen bestimmten Schwellenwert erreicht hat bzw. eine innere Reglerabweichung unter einem vorbestimmten weiteren Schwellenwert liegt, wird der Fondwasserkreislauf erst wieder zugeschaltet.

## Patentansprüche

1. Verfahren zur Regelung des Betriebs einer Fahrzeug-Standheizung/Standlüftung,
mit den Schritten:
(Schritt S1) Aktivieren eines Standheizung/Standlüftung, (Schritt S2) Entscheiden, ob eine Standheizung oder Standlüftung erforderlich ist,
wenn in Schritt S2 entschieden wurde, dass eine Standlüftung erforderlich ist, Abzweigen in eine Routine zur Standlüftungsregelung,
(Schritt S3) wenn in Schritt S2 entschieden wurde, dass eine Standheizung erforderlich ist, Erwärmen eines Front-und eines Fondwasserkreislaufs,
(Schritt S4) Überprüfen, ob die Temperatur des Front- und Fondwasserkreislaufs eine bestimmte Grenztemperatur erreicht hat,
wenn das Ergebnis in Schritt S4 negativ ist, Rückkehr zu Schritt S3,
(Schritt S5) wenn das Ergebnis in Schritt S4 positiv ist, Abschalten des Fondwasserkreislaufs,
(Schritt S6) Erfassen einer Front-Einblastemperatur, (Schritt S7) Berechnen einer Soll-Einblastemperatur abhängg von der Außentemperatur, Ist-Innenraumtemperatur und einer Soll-Innenraumtemperatur,
(Schritt S8) Überprüfen, ob die Front-Einblastemperatur aus Schritt S6 einen vorgegebenen Schwellenwert überschreitet oder die Soll-Einblastemperatur über der Front-Einblastemperatur liegt,
wenn keine der Bedingungen erfüllt ist, Rückkehr zu Schritt S6,
(Schritt S9) wenn eine der Bedingungen in Schritt S8 erfüllt ist, Wiederbeheizen des Fondkreislaufs.

2. Verfahren zur Regelung des Betriebs einer Fahrzeug-Standheizung/Standlüftung nach Anspruch 1,
**dadurch gekennzeichnet,**
**dass**
in Schritt S4 die Überprüfung, ob eine Grenztemperatur überschritten ist, **dadurch** erfolgt, dass überprüft wird, ob die Standheizungssteuerung ein Gebläse_Ein-Bit gesetzt hat.

3. Verfahren zur Regelung des Betriebs einer Fahrzeug-Standheizung/Standlüftung nach Anspruch 1 oder 2,
**dadurch gekennzeichnet,**
**dass**
der Schwellenwert in Schritt S8 54°C beträgt.

4. Verfahren zur Regelung des Betriebs einer Fahrzeug-Standheizung/Standlüftung nach einem der Ansprüche 1 bis 3,
**dadurch gekennzeichnet,**
**dass**
die Entscheidung in Schritt S2 abhängig von einem Bit "Standheizen/Standlüften" sowie eingestellter Innenraumsolltemperatur (T_{ISoll}), der Innenraum-Isttemperatur (T_{I}) und der Außentemperatur (T_{A}) erfolgt, wobei für eine Entscheidung für den Standheizungsbetrieb ausreichend ist, wenn zumindest ein Klimasteuergerät entscheidet, dass ein Heizen erforderlich ist, und ein Standlüftungsbetrieb nur erfolgt, wenn alle Klimasteuergeräte entscheiden, dass ein Standlüften erforderlich ist.

5. Verfahren zur Regelung des Betriebs einer Fahrzeug-Standheizung/Standlüftung nach einem der Ansprüche 1 bis 4,
**dadurch gekennzeichnet,**
**dass**,
die Grenztemperatur in Schritt S4 40°C beträgt.

6. Verfahren zur Regelung des Betriebs einer Fahrzeug-Standheizung/Standlüftung nach einem der Ansprüche 1 bis 5,
**dadurch gekennzeichnet,**
**dass**,
in Schritt S8 überprüft wird, ob eine innere Reglerabweichung kleiner als -10K ist.

7. Verfahren zur Regelung des Betriebs einer Fahrzeug-Standheizung/Standlüftung nach einem der Ansprüche 1 bis 6,
**dadurch gekennzeichnet,**
**dass**,
eine Begrenzung der Soll-Einblastemperatur erfolgen kann.

8. Verfahren zur Regelung des Betriebs einer Fahrzeug-Standheizung/Standlüftung nach Anspruch 7,
**dadurch gekennzeichnet,**
**dass**,
die Begrenzung der Soll-Einblastemperatur im Winter nicht auf die Kühlwassertemperatur erfolgt.

9. Verfahren zur Regelung des Betriebs einer Fahrzeug-Standheizung/Standlüftung nach einem der Ansprüche 1 bis 8,
**dadurch gekennzeichnet,**
**dass**,
bei Einblastemperaturen der Frontklimaanlage unter 40°C die Soll-Einblastemperaturen der Fondklimaanlage auf 60°C begrenzt werden, wobei die Soll-Einblastemperaturen der Fond-Klimaanlage auf 60° solange vorgegeben werden, bis die Einblasbedingungen der Frontklimaanlage erfüllt sind.

10. Verfahren zur Regelung des Betriebs einer Fahrzeug-Standheizung/Standlüftung nach einem der Ansprüche 1 bis 9,
**dadurch gekennzeichnet,**
**dass**,
die Entscheidung Standheizung/Standlüftung in Schritt S2 erst erfolgt, wenn alle dazu notwendigen Fühlerwerte richtig initialisiert sind.

11. Verfahren zur Regelung des Betriebs einer Fahrzeug-Standheizung/Standlüftung nach einem der Ansprüche 1 bis 10,
**dadurch gekennzeichnet,**
**dass**,
eine Restwärmefunktion der Klimaanlage während eines aktiven Standlüftungs/Standheizungsbetriebs deaktiviert ist.

## Claims

1. Method for regulation of the operation of a vehicle auxiliary heating/auxiliary ventilation,
having the steps:
(step S1) activating an auxiliary heating/auxiliary ventilation,
(step S2) deciding whether an auxiliary heating or auxiliary ventilation is required,
if it has been decided in step S2 that an auxiliary ventilation is required, branching off into a routine for controlling the auxiliary ventilation,
(step S3) if it has been decided in step S2 that an auxiliary heating is required, heating a front and a rear water circuit,
(step S4) checking whether the temperature of the front and rear water circuit has reached a certain limit temperature,
if the result is negative in step S4, returning to step S3,
(step S5) if the result is positive in step S4, switching off the rear water circuit,
(step S6) detecting a front blow-in temperature,
(step S7) calculating a desired blow-in temperature as a function of the outside temperature, actual interior temperature and a desired interior temperature,
(step S8) checking whether the front blow-in temperature from step S6 exceeds a predetermined threshold value or whether the desired blow-in temperature is above the front blow-in temperature,
if none of the conditions is fulfilled, returning to step S6,
(step S9) if one of the conditions is fulfilled in step S8, reheating the rear circuit.

2. Method for regulation of the operation of a vehicle auxiliary heating/auxiliary ventilation according to Claim 1,
**characterized**
**in that**
in step S4 checking whether a limit temperature is exceeded takes place by it being checked whether the auxiliary heating control system has set a fan_on bit.

3. Method for regulation of the operation of a vehicle auxiliary heating/auxiliary ventilation according to Claim 1 or 2,
**characterized**
**in that**
the threshold value is 54°C in step S8.

4. Method for regulation of the operation of a vehicle auxiliary heating/auxiliary ventilation according to Claims 1 to 3,
**characterized**
**in that**
the decision in step S2 takes place as a function of a bit "auxiliary heating/auxiliary ventilation" and of a set interior desired temperature (T_{IDes}), the interior actual temperature (T_{I}) and the outside temperature (T_{A}), it being sufficient for a decision in favour of the auxiliary heating operation if at least one air-conditioning control unit decides that heating is required, and an auxiliary ventilation operation only taking place if all of the air-conditioning control units decide that auxiliary ventilation is required.

5. Method for regulation of the operation of a vehicle auxiliary heating/auxiliary ventilation according to Claims 1 to 4,
**characterized**
**in that**
the limit temperature is 40°C in step S4.

6. Method for regulation of the operation of a vehicle auxiliary heating/auxiliary ventilation according to Claims 1 to 5,
**characterized**
**in that**
it is checked in step S8 whether internal deviation by a regulator is less than -10 K.

7. Method for regulation of the operation of a vehicle auxiliary heating/auxiliary ventilation according to Claims 1 to 6,
**characterized**
**in that**
the desired blow-in temperature can be limited.

8. Method for regulation of the operation of a vehicle auxiliary heating/auxiliary ventilation according to Claim 7,
**characterized**
**in that**
the desired blow-in temperature in winter is not limited to the cooling water temperature.

9. Method for regulation of the operation of a vehicle auxiliary heating/auxiliary ventilation according to Claims 1 to 8,
**characterized**
**in that**
at blow-in temperatures of the front air-conditioning system of below 40°C, the desired blow-in temperatures of the rear air-conditioning system are limited to 60°C, the desired blow-in temperatures of the rear air-conditioning system being specified at 60°C until the blow-in conditions of the front air-conditioning system are fulfilled.

10. Method for regulation of the operation of a vehicle auxiliary heating/auxiliary ventilation according to Claims 1 to 9,
**characterized**
**in that**
the auxiliary heating/auxiliary ventilation decision in step S2 only takes place when all of the sensor values necessary for it have been correctly initialized.

11. Method for regulation of the operation of a vehicle auxiliary heating/auxiliary ventilation according to Claims 1 to 10,
**characterized**
**in that**
a residual heating function of the air-conditioning system is deactivated during an active auxiliary ventilation/auxiliary heating operation.

## Revendications

1. Procédé de régulation du régime d'un chauffage auxiliaire/d'une ventilation auxiliaire d'un véhicule avec les étapes :
(Étape S1) Activer un chauffage auxiliaire/une ventilation auxiliaire,
(Étape S2) Décider si un chauffage auxiliaire/ une ventilation auxiliaire est nécessaire,
si à l'étape S2, on a décidé qu'une ventilation auxiliaire est nécessaire, dériver dans une routine pour la régulation de la ventilation auxiliaire,
(Étape S3) Si à l'étape S2, on a décidé qu'un chauffage auxiliaire est nécessaire, chauffer un circuit d'eau frontal et de fond,
(Étape S4) Vérifier si la température du circuit d'eau frontal et de fond a atteint une certaine température limite,
si le résultat de l'étape S4 est négatif, retour à l'étape S3,
(Étape S5) Si le résultat de l'étape S4 est positif, mettre à l'arrêt le circuit d'eau de fond,
(Étape S6) Détecter une température d'insufflation frontale,
(Étape S7) Calculer une température de consigne pour l'insufflation frontale, en fonction de la température extérieure, de la température réelle de l'habitacle et d'une température de consigne pour l'habitacle,
(Étape S8) Vérifier si la température d'insufflation frontale de l'étape S6 dépasse une valeur seuil prédéfinie ou si la température de consigne pour l'insufflation est supérieure à la température d'insufflation frontale,
si aucune des conditions n'est satisfaite, retour à l'étape S6,
(Étape S9) si l'une des conditions de l'étape S8 est satisfaite, chauffer de nouveau le circuit de fond.

2. Procédé de régulation du régime d'un chauffage auxiliaire/d'une ventilation auxiliaire d'un véhicule selon la revendication 1, **caractérisé en ce qu'**à l'étape S4, l'étape consistant à vérifier si une température limite est dépassée est assurée par une étape consistant à vérifier si le système de contrôle du chauffage auxiliaire a placé un bit_de marche soufflerie.

3. Procédé de régulation du régime d'un chauffage auxiliaire/d'une ventilation auxiliaire d'un véhicule selon la revendication 1 ou 2, **caractérisé en ce que** la valeur seuil de l'étape S8 est de 54°C.

4. Procédé de régulation du régime d'un chauffage auxiliaire/d'une ventilation auxiliaire d'un véhicule selon l'une quelconque des revendications 1 à 3, **caractérisé en ce que** la décision à l'étape S2 est prise en fonction d'un bit "chauffage auxiliaire/ventilation auxiliaire", ainsi que de la température de consigne réglée pour l'habitacle (T_{Isoll}), de la température réelle de l'habitacle (T_{I}) et de la température extérieure (T_{A}), dans lequel cas, il est suffisant pour une décision de mise en service du chauffage auxiliaire qu'au moins un système de contrôle de climatisation décide qu'un chauffage est nécessaire et qu'une mise en service de la ventilation auxiliaire n'a lieu que si tous les systèmes de contrôle de climatisation décident qu'une ventilation auxiliaire est nécessaire.

5. Procédé de régulation du régime d'un chauffage auxiliaire/d'une ventilation auxiliaire d'un véhicule selon l'une quelconque des revendications 1 à 4, **caractérisé en ce que** la température limite de l'étape S4 est de 40°C.

6. Procédé de régulation du régime d'un chauffage auxiliaire/d'une ventilation auxiliaire d'un véhicule selon l'une quelconque des revendications 1 à 5, **caractérisé en ce que** à l'étape S8, on vérifie si un écart du régulateur interne est inférieur à -10K.

7. Procédé de régulation du régime d'un chauffage auxiliaire/d'une ventilation auxiliaire d'un véhicule selon l'une quelconque des revendications 1 à 6, **caractérisé en ce qu'**on peut procéder à une limitation de la température de consigne pour l'insufflation.

8. Procédé de régulation du régime d'un chauffage auxiliaire/d'une ventilation auxiliaire d'un véhicule selon la revendication 7, **caractérisé en ce qu'**en hiver, la limitation de la température de consigne pour l'insufflation ne concerne pas la température d'eau de refroidissement.

9. Procédé de régulation du régime d'un chauffage auxiliaire/d'une ventilation auxiliaire d'un véhicule selon l'une quelconque des revendications 1 à 8, **caractérisé en ce que** si les températures d'insufflation du système de climatisation frontal sont inférieures à 40°C, les températures de consigne pour le système de climatisation de fond sont limitées à 60°C, les températures de consigne pour l'insufflation du système de climatisation du fond de 60°C étant prédéfinies jusqu'à ce que les conditions d'insufflation pour le système de climatisation frontal soient satisfaites.

10. Procédé de régulation du régime d'un chauffage auxiliaire/d'une ventilation auxiliaire d'un véhicule selon l'une quelconque des revendications 1 à 9, **caractérisé en ce que** la décision de chauffage auxiliaire/ventilation auxiliaire de l'étape S2 n'est prise que si toutes les valeurs de sondes nécessaires à cet effet sont bien initialisées.

11. Procédé de régulation du régime d'un chauffage auxiliaire/d'une ventilation auxiliaire d'un véhicule selon l'une quelconque des revendications 1 à 10, **caractérisé en ce qu'**une fonction de chaleur résiduelle du système de climatisation est désactivée pendant un régime actif de la ventilation auxiliaire/du chauffage auxiliaire.
